# NOUVEAU FASCICULE DE BREVET EUROPEEN

(11) **EP 2 365 288 B2**
(45) Date de publication et mention de la décision concernant l'opposition: **27.02.2019**
(45) Mention de la délivrance du brevet: 16.03.2016
(21) Numéro de dépôt: 10177783.7
(22) Date de dépôt: 21.09.2010
(51) Int. Cl.: G01D 3/00

(54) **Dispositif de détection configurable**
Konfigurierbare Detektiervorrichtung
Configurable detection device

(30) Priorité: 12.10.2009 FR 0957098
(43) Date de publication de la demande: 14.09.2011
(73) Titulaire: Schneider Electric Industries SAS, 92500 Rueil-Malmaison (FR)
(72) Inventeur: BERNARD, Jacques, 16340, L'Isle d'Espagnac (FR); HAMPIKIAN, Philippe, 16000, Angoulême (FR)
(74) Mandataire: Dufresne, Thierry

(56) Documents cités:
- WO-A1-2009/081951
- DE-A1-102007 001 995
- JP-A- 2003 255 054
- US-B1- 6 389 903

## Description

La présente invention se rapporte à un dispositif de détection comportant un détecteur configurable à l'aide d'un adaptateur.

Afin de pouvoir s'adapter à tous les types de situation et d'environnement, les détecteurs, par exemple de type inductif de proximité, sont aujourd'hui proposés en un grand nombre de variantes :
- les variantes liées au type ou au format du boîtier, qui peut être cubique ou cylindrique, de diamètres 8, 12, 18 ou 30,
- les variantes liées à la noyabilité, c'est-à-dire noyable, quasi-noyable ou non noyable,
- les variantes liées à la portée, c'est-à-dire portée simple ou portée augmentée,
- les variantes liées au type de sortie, c'est-à-dire NPN, PNP, DC 2 fils, ACDC 2fils...
- les variantes liées à la logique de sortie, c'est-à-dire NO ("Normally Opened") ou NC ("Normally Closed"),
- les variantes de longueurs ou de types de matériaux utilisés pour le boîtier...

Toutes ces variantes multiplient le nombre de références. Afin de réduire le nombre de références, il a été proposé dans la demande de brevet JP2003255054 d'employer un détecteur comportant deux sorties, c'est-à-dire PNP et NPN, et deux adaptateurs distincts permettant de connecter l'une des deux sorties du détecteur.

Cette solution de l'art antérieur n'est pas suffisante car elle ne permet que de réduire de moitié le nombre de références et ne permet pas de tenir compte de plusieurs paramètres configurables du détecteur.

Le but de l'invention est donc de proposer un dispositif de détection dans lequel il est possible de tenir compte de plusieurs variantes de configurations afin de réduire de manière importante le nombre de références de détecteurs. Le dispositif de détection de l'invention peut se présenter sous la forme de deux variantes distinctes.

Dans une variante de réalisation, le dispositif de détection comporte :
- un détecteur susceptible d'être configuré suivant au moins deux configurations déterminées,
- un adaptateur parmi plusieurs adaptateurs distincts, chaque adaptateur pouvant être adapté sur le détecteur,
- lorsqu'il est adapté sur le détecteur, chaque adaptateur comporte :
- des moyens mécaniques de sélection pour sélectionner un type de signal de sortie du dispositif de détection à destination des bornes d'un connecteur externe,
- des moyens de configuration pour attribuer au détecteur une configuration déterminée.

Selon l'invention, les moyens mécaniques de sélection comportent des broches conductrices et un détrompeur mécanique positionné différemment sur chaque adaptateur par rapport aux broches.

Selon une autre particularité de cette variante de réalisation, le type de signal de sortie du détecteur est sélectionné parmi PNP NC, NPN NC, NPN NO, PNP NO, DC deux fils NO ou DC deux fils NC.

Selon une autre particularité, la configuration attribuée au détecteur correspond à portée simple ou portée augmentée.

Dans une autre variante de réalisation, le dispositif de détection comporte :
- un détecteur susceptible d'être configuré suivant au moins deux configurations déterminées,
- un adaptateur positionné sur le détecteur comportant :
- une partie mobile par rapport au détecteur susceptible de prendre une position parmi plusieurs positions distinctes,
- des moyens mécaniques de sélection pour sélectionner un type de signal de sortie du dispositif de détection à destination des bornes d'un connecteur externe en fonction de la position prise par la partie mobile,
- des moyens de configuration pour attribuer au détecteur une configuration déterminée.

Selon l'invention, les moyens mécaniques de sélection coopèrent mécaniquement avec les moyens de configuration de manière à adapter la configuration du détecteur au type de signal de sortie sélectionné grâce aux moyens de sélection.

Selon une autre particularité, les moyens mécaniques de sélection comportent des broches conductrices et un détrompeur mécanique mobiles en pivotement l'un par rapport à l'autre.

Selon une autre particularité de cette variante de réalisation, la partie mobile de l'adaptateur comporte une pièce de configuration actionnable en rotation par quart de tour autour d'un axe principal du dispositif.

Selon une autre particularité de cette variante de réalisation, les moyens de configuration comportent une lèvre réalisée sur la pièce de configuration et apte à coopérer avec un interrupteur réalisée sur le détecteur en vue de configurer le signal de sortie du détecteur.

Selon une particularité des deux variantes de réalisation, la configuration attribuée au détecteur correspond à NO ou NC.

Selon une autre particularité des deux variantes de réalisation, le connecteur externe est de type M12 conforme à la norme IEC60947-5-2.

D'autres caractéristiques et avantages vont apparaître dans la description détaillée qui suit en se référant à un mode de réalisation donné à titre d'exemple et représenté par les dessins annexés sur lesquels :
- les figures 1A et 1B représentent schématiquement l'architecture intérieure d'une première variante de réalisation du dispositif de détection de l'invention, respectivement en vue de dessus et en vue de côté,
- les figures 2A, 2B et 2C représentent schématiquement l'architecture intérieure d'une seconde variante de réalisation du dispositif de détection de l'invention, respectivement en vue de côté, en vue de dessus et en vue de dessous,
- la figure 3 montre la sortie d'un connecteur de type M12,
- les figures 4A, 4B, 4C, 4D montrent la sortie du dispositif de détection de l'invention dans différentes configurations,
- les figures 5A, 5B, 5C, 5D montrent la sortie du connecteur M12 de la figure 3 et indiquent plus particulièrement les broches actives de ce connecteur lorsque le dispositif de détection de l'invention présente les différentes configurations représentées sur les figures 4A à 4D,
- les figures 6A et 6B montrent fonctionnellement le câblage d'un dispositif de détection de type DC à deux fils de sortie non polarisé configuré respectivement en PNP NO à portée augmentée et en NPN NC à portée simple,
- les figures 7A et 7B montrent fonctionnellement le câblage d'un dispositif de détection de type DC à deux fils de sortie polarisé configuré respectivement en PNP NO à portée augmentée et en NPN NC à portée simple,
- les figures 8A et 8B montrent fonctionnellement le câblage d'un dispositif de détection de type DC à quatre fils de sortie PNP et NPN configuré respectivement en PNP NO à portée augmentée et en NPN NC à portée simple,
- les figures 9A et 9b montrent fonctionnellement le câblage d'un dispositif de détection de type DC à trois fils à sortie flottante configuré respectivement en PNP NO à portée augmentée et en NPN NC à portée simple.

Dans la suite de la description, les éléments identiques dans les deux variantes de réalisation décrites ci-dessous conservent les mêmes références numériques.

L'invention consiste en un dispositif de détection comportant un détecteur 6, 60 universel de base configurable comportant un circuit imprimé 600 et un adaptateur 7, 70 positionné sur le détecteur permettant de configurer différents paramètres du détecteur. Le détecteur 6, 60 est donc toujours identique et son adaptateur 7, 70 permet de lui conférer une configuration de fonctionnement souhaitée.

Le principe de l'invention est d'employer un adaptateur 7, 70 positionné ou positionnable sur le détecteur 6, 60 et qui comporte en entrée des moyens pour configurer le détecteur sur lequel il est assemblé et en sortie des moyens pour sélectionner un type de signal de sortie du détecteur à destination des bornes d'un connecteur externe.

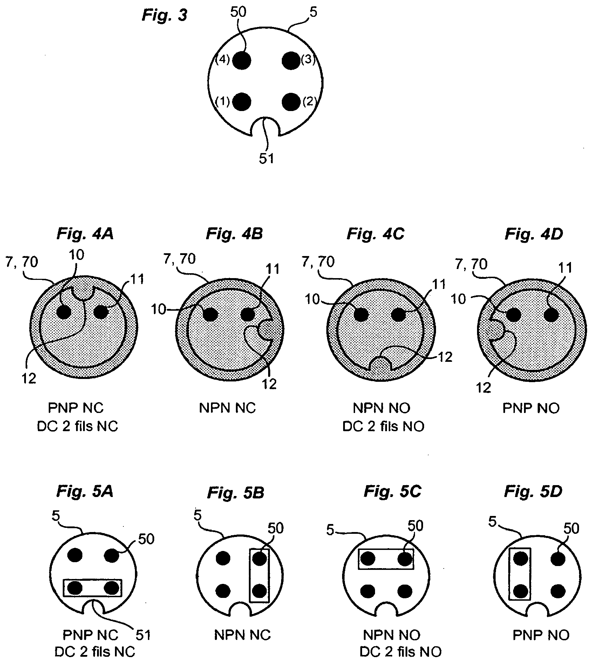

L'invention est particulièrement adaptée pour un dispositif de détection dont la sortie est connectée à un connecteur 5 de type M12 conforme à la norme IEC60947-5-2. En référence à la figure 3, un connecteur M12 d'un câble de liaison destiné à être connecté sur un détecteur comporte quatre broches femelles 50 organisées en carré et un détrompeur mécanique 51. La première broche (1) du connecteur M12 correspond à la borne plus (+) de l'alimentation, la seconde broche (2) du connecteur M12 correspond à la sortie NC (pour "Normally Closed", c'est-à-dire normalement fermé), la troisième broche (3) du connecteur M12 correspond à la borne moins (-) de l'alimentation et la quatrième broche (4) du connecteur M12 correspond à la sortie NO ("Normally Opened", c'est-à-dire normalement ouvert).

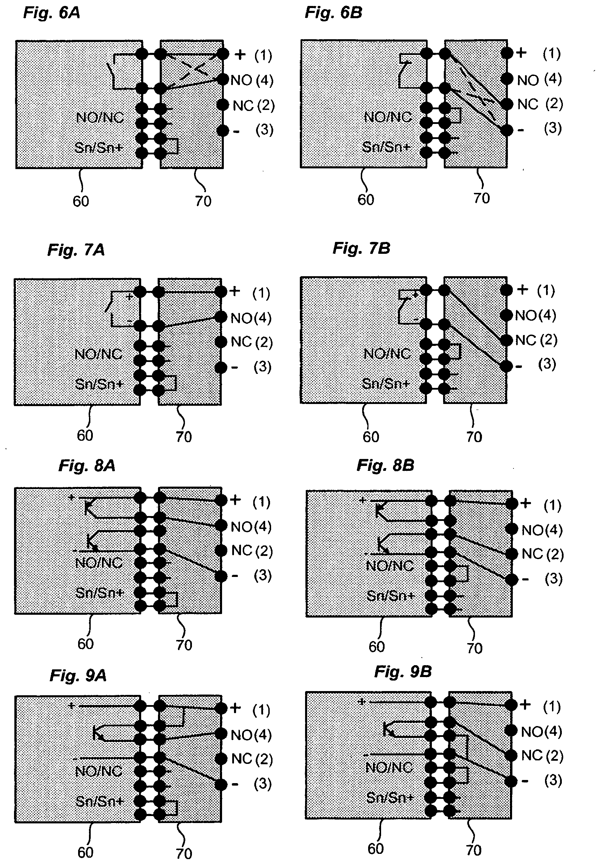

Lorsqu'un dispositif de détection présente une configuration de base de type DC à deux fils de sortie polarisés ou non polarisés, seules deux broches de sortie de ce dispositif sont actives et reliées à deux broches complémentaires du connecteur externe M12. Selon la connexion des deux broches du dispositif vers le connecteur M12, la configuration de fonctionnement du dispositif sera différente et pourra être de type PNP NC, NPN NC, NPN NO, PNP NO, DC ("Direct Current" c'est-à-dire courant continu) deux fils NO ou DC deux fils NC. Sur une base DC à deux fils de sortie non polarisé, la figure 6A montre par exemple les connexions réalisées pour obtenir une configuration de sortie PNP NO tandis que la figure 6B montre les connexions réalisées pour obtenir une configuration NPN NC. Sur une base DC à deux fils de sortie polarisé, la figure 7A montre par exemple les connexions réalisées pour obtenir une configuration de sortie PNP NO tandis que la figure 7B montre les connexions réalisées pour obtenir une configuration NPN NC. Sur une base DC quatre fils à sortie PNP et NPN, la figure 8A montre par exemple les connexions réalisées pour obtenir une configuration de sortie PNP NO tandis que la figure 8B montre les connexions réalisées pour obtenir une configuration NPN NC. Sur une base DC trois fils à sortie flottante, la figure 9A montre par exemple les connexions réalisées pour obtenir une configuration de sortie PNP NO tandis que la figure 9B montre les connexions réalisées pour obtenir une configuration NPN NC.

Dans le cas particulier d'une base DC deux fils, en référence aux figures 5A à 5D, il s'avère que les deux broches (encadrées dans les rectangles) du connecteur M12 qui sont nécessaires et suffisantes pour attribuer une configuration de fonctionnement au dispositif sont toujours contigües quelle que soit la configuration de sortie conférée au dispositif, c'est-à-dire PNP NC, NPN NC, NPN NO, PNP NO, DC deux fils NO ou DC deux fils NC.

Par conséquent, dans le cas d'une base DC deux fils, l'invention consiste à employer un adaptateur 7, 70 comportant seulement deux broches 10, 11 contigües, mâles en sortie, et un détrompeur 12 mécanique dont la position peut différer par rapport aux deux broches 10, 11 par réglage mécanique ou en proposant plusieurs adaptateurs différents. Les deux broches 10, 11 de l'adaptateur sont connectées d'un côté sur des plages de connexion 602 réalisées sur une première face du circuit imprimé 600 du détecteur 6 60 et de l'autre côté sont libres et connectables sur le connecteur M12 en sortie de l'adaptateur 7, 70. En changeant la position du détrompeur 12, il est possible d'orienter différemment le connecteur M12 par rapport au dispositif et ainsi de sélectionner le type de signal de sortie du dispositif.

Les figures 4A à 4D montrent l'adaptateur 7, 70 avec son détrompeur 12 dans différentes positions permettant ainsi d'attribuer différentes configurations de fonctionnement au détecteur. Selon la position prise par le détrompeur 12 sur chacune des figures 4A à 4D, les deux broches connectées du connecteur M12 complémentaire seront différentes comme cela est indiqué par le rectangle sur les figures correspondantes 5A à 5D. Le dispositif sera ainsi configuré en PNP NC (qui est équivalent au DC deux fils NC) sur la figure 4A, en NPN NC sur la figure 4B, en NPN NO (qui est équivalent au DC deux fils NO) sur la figure 4C, et en PNP NO sur la figure 4D.

Par ailleurs, en entrée de l'adaptateur 7, 70, des moyens de configuration permettent pour leur part d'attribuer une configuration déterminée au détecteur 6, 60. Le détecteur peut en effet être configurée en NO ou NC ou en portée simple (Sn) ou portée augmentée (Sn+) (voir figures 6A à 9B). D'autres paramètres de configuration du détecteur peuvent également être réglés tels que le mode barrage ou reflex pour un détecteur optique ou à ultrasons. Bien entendu la configuration NO ou NC du détecteur 6, 60 doit être cohérente avec celle reportée en sortie de l'adaptateur 7, 70 en réglant ou choisissant la position du détrompeur 12 par rapport aux broches 10, 11 de l'adaptateur 7, 70.

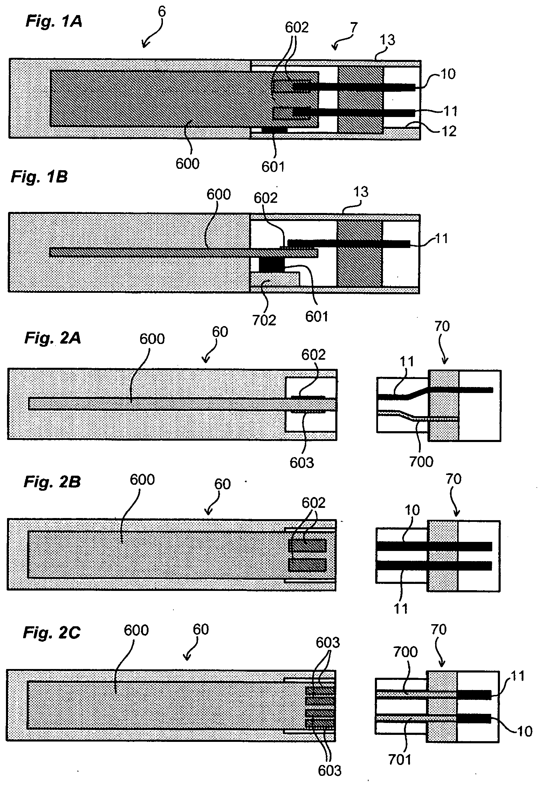

Dans le cas d'une base DC deux fils, l'invention se décline en deux variantes distinctes. La première variante (figures 1A et 1B) consiste à employer un unique adaptateur 7 qui est réglé par l'utilisateur par rapport au détecteur 6 pour conférer la configuration de fonctionnement souhaitée au dispositif de détection. La seconde variante (figures 2A à 2C) consiste à employer plusieurs adaptateurs 70 distincts destinés chacun à attribuer une configuration de fonctionnement unique et déterminée au dispositif de détection.

Dans la première variante, l'adaptateur 7 est par exemple attaché de manière imperdable au détecteur 6 tandis que dans la seconde variante, chaque adaptateur 70 est remplaçable par un autre selon la configuration de fonctionnement souhaitée.

Dans la première variante décrite ci-dessus, il suffit de proposer un adaptateur 7 positionné sur le détecteur 6, par exemple fixé de manière définitive sur celui-ci, ledit adaptateur 7 comportant les deux broches 10, 11 contigües soudées directement sur le circuit imprimé 600 et le détrompeur 12 mécanique complémentaire du détrompeur 51 du connecteur M12. La position du détrompeur 12 peut alors être réglée mécaniquement, par exemple par quart de tour, afin de sélectionner un type de signal de sortie du détecteur 6 à destination des broches du connecteur 5 externe M12. Le réglage peut par exemple intervenir à l'aide d'une pièce de configuration 13 mobile de l'adaptateur 7 qu'il est possible de faire tourner par quart de tour autour de l'axe du dispositif et qui entraîne en rotation le détrompeur 12 mécanique par rapport aux deux broches 10, 11 fixes. Le détrompeur mécanique 12 est par exemple formé sur la pièce de configuration 13.

Dans cette première variante, la rotation de la pièce de configuration 13 de l'adaptateur et donc du détrompeur 12 mécanique entraîne la rotation d'une lèvre 702 (figure 1B) présente sur la pièce de configuration 13. Cette lèvre 702 est susceptible de coopérer avec un interrupteur 601 soudé sur la face inférieure du circuit imprimé 600 du détecteur, cet interrupteur 601 permettant de configurer la détection NO ou NC qui doit être attribuée au détecteur et qui correspond au type de signal de sortie sélectionné en sortie de l'adaptateur. Selon l'état ouvert ou fermé de l'interrupteur 601, le détecteur sera configuré respectivement en NO ou en NC. Dans cette variante, le réglage de la position du détrompeur en sortie de l'adaptateur permet donc d'entraîner automatiquement une action correspondante sur l'interrupteur en entrée de l'adaptateur. Bien entendu, d'autres moyens de configuration peuvent être employés en remplacement de la lèvre 702 et de l'interrupteur 601.

Dans la seconde variante, il suffit de proposer différents adaptateurs 70 comportant chacun les deux broches 10, 11 contigües et le détrompeur mécanique 12 complémentaire du détrompeur 51 employé dans le connecteur M12, la position du détrompeur 12 pouvant différer par rapport aux deux broches 10, 11 entre les différents adaptateurs 70. Chaque adaptateur 70 permet alors de sélectionner un type de signal de sortie qui peut être PNP NO, NPN NO (équivalent au DC deux fils NO), PNP NC (équivalent au DC deux fils NC) ou NPN NC comme décrit ci-dessus.

Par ailleurs, dans cette seconde variante, en entrée, chaque adaptateur 70 peut comporter des moyens pour coopérer avec des plages de connexion 603 particulières réalisées sur le circuit imprimé 600 du détecteur. L'adaptateur 70 peut comporter ou non une ou plusieurs broches 700, 701 permettant de relier par exemple deux par deux des plages de connexion 603 réalisées par exemple par paire sur la seconde face du circuit imprimé 600 du détecteur 6. Selon la présence ou non de ces différentes broches 700 dans l'adaptateur, le détecteur aura différentes configuration, c'est-à-dire NO ou NC, portée simple (Sn) ou portée augmentée (Sn+), mode barrage ou mode réflexe.

## Revendications

1. Dispositif de détection comportant :
- un détecteur (60) susceptible d'être configuré suivant au moins deux configurations déterminées,
- un adaptateur (70) parmi plusieurs adaptateurs distincts, chaque adaptateur (70) pouvant être adapté sur le détecteur et comportant deux broches conductrices (10, 11) contigües et un détrompeur,
- des moyens de configuration pour attribuer au détecteur une configuration déterminée choisie parmi portée simple et portée augmentée,
dans lequel, lorsque l'adaptateur est adapté sur le détecteur, la position dudit détrompeur par rapport auxdites deux broches contigües est adaptée pour sélectionner un type de signal de sortie du dispositif de détection à destination des bornes d'un connecteur (5) externe.

2. Dispositif selon la revendication 1, **caractérisé en ce que** les moyens mécaniques de sélection comportent des broches (10, 11) conductrices et un détrompeur (12) mécanique positionné différemment sur chaque adaptateur (70) par rapport aux broches.

3. Dispositif selon la revendication 1 ou 2, **caractérisé en ce que** le type de signal de sortie du détecteur (60) est sélectionné parmi PNP NC, NPN NC, NPN NO, PNP NO, DC deux fils NO ou DC deux fils NC.

4. Dispositif selon l'une des revendications 1 à 3, **caractérisé en ce que** la configuration attribuée au détecteur correspond à NO ou NC.

5. Dispositif selon l'une des revendications 1 à 4, **caractérisé en ce que** le connecteur (5) externe est de type M12 conforme à la norme IEC60947-5-2.

6. Dispositif de détection comportant :
- un détecteur (6) susceptible d'être configuré suivant au moins deux configurations déterminées,
- un adaptateur (7) positionné sur le détecteur,
dans lequel l'adaptateur (7) comporte :
- une pièce de configuration (13) mobile par rapport au détecteur susceptible de prendre une position parmi plusieurs positions distinctes,
- deux broches conductrices (10, 11) contigües et un détrompeur (12) mécanique adapté pour être entraîné en rotation par ladite pièce de configuration (13) mobile par rapport auxdites deux broches conductrices pour sélectionner un type de signal de sortie du dispositif de détection à destination des bornes d'un connecteur externe en fonction de la position prise par la pièce de configuration (13) par rapport auxdites deux broches conductrices,
- des moyens de configuration pour attribuer au détecteur (6) une configuration déterminée.

7. Dispositif selon la revendication 6, **caractérisé en ce que** les moyens mécaniques de sélection coopèrent mécaniquement avec les moyens de configuration de manière à adapter la configuration du détecteur (6) au type de signal de sortie sélectionné grâce aux moyens de sélection.

8. Dispositif selon la revendication 6 ou 7, **caractérisé en ce que** les moyens mécaniques de sélection comportent des broches (10, 11) conductrices et un détrompeur (12) mécanique mobiles en pivotement l'un par rapport à l'autre.

9. Dispositif selon la revendication 8, **caractérisé en ce que** la pièce de configuration (13) est actionnable en rotation par quart de tour autour d'un axe principal du dispositif.

10. Dispositif selon la revendication 9, **caractérisé en ce que** les moyens de configuration comportent une lèvre (702) réalisée sur la pièce de configuration (13) et apte à coopérer avec un interrupteur réalisé sur le détecteur (6) en vue de configurer le signal de sortie du détecteur (6).

11. Dispositif selon l'une des revendications 6 à 10, **caractérisé en ce que** la configuration attribuée au détecteur (6) correspond à NO ou NC.

12. Dispositif selon l'une des revendications 6 à 11, **caractérisé en ce que** le connecteur (5) externe est de type M12 conforme à la norme IEC60947-5-2.

## Patentansprüche

1. Detektiervorrichtung, umfassend:
- einen Detektor (60), der geeignet ist, nach mindestens zwei vorgegebenen Konfigurationen konfiguriert zu werden,
- einen Adapter (70) unter mehreren verschiedenen Adaptern, wobei jeder Adapter (70) auf dem Detektor angebracht werden kann und zwei aneinander grenzende leitfähige Stifte (10, 11) und eine Kodierung aufweist,
- Konfigurationsmittel, um dem Detektor eine bestimmte Konfiguration zuzuordnen, die aus einfacher und erhöhter Reichweite ausgewählt ist,
wobei die Position der Kodierung in Bezug auf die beiden aneinander grenzenden Stifte, wenn der Adapter auf dem Detektor angebracht ist, dazu ausgeführt ist, eine Art von Ausgangssignal der Detektiervorrichtung für die Klemmen eines externen Steckverbinders (5) auszuwählen.

2. Vorrichtung nach Anspruch 1, **dadurch gekennzeichnet, dass** die mechanischen Auswahlmittel leitfähige Stifte (10, 11) und eine mechanische Kodierung (12) aufweisen, die auf jedem Adapter (70) unterschiedlich in Bezug auf die Stifte angeordnet ist.

3. Vorrichtung nach Anspruch 1 oder 2, **dadurch gekennzeichnet, dass** die Art von Ausgangssignal des Detektors (60) aus PNP NC, NPN NC, NPN NO, PNP NO, DC 2-Draht NO oder DC 2-Draht NC ausgewählt ist.

4. Vorrichtung nach einem der Ansprüche 1 bis 3, **dadurch gekennzeichnet, dass** die Konfiguration, die dem Detektor zugeordnet ist, NO oder NC entspricht.

5. Vorrichtung nach einem der Ansprüche 1 bis 4, **dadurch gekennzeichnet, dass** der externe Steckverbinder (5) vom Typ des M12-Steckverbinders gemäß der Norm IEC60947-5-2 ist.

6. Detektiervorrichtung, umfassend:
- einen Detektor (6), der geeignet ist, nach mindestens zwei vorgegebenen Konfigurationen konfiguriert zu werden,
- einen Adapter (7), der auf dem Detektor angeordnet ist,
wobei der Adapter (7) Folgendes aufweist:
- ein Konfigurationsteil (13), das in Bezug auf den Detektor beweglich ist, das geeignet ist, eine Position unter mehreren verschiedenen Positionen einzunehmen,
- zwei aneinander grenzende leitfähige Stifte (10, 11) und eine mechanische Kodierung (12), die dazu ausgeführt ist, durch das bewegliche Konfigurationsteil (13) in Bezug auf beiden leitfähigen Stifte drehangetrieben zu werden, um eine Art von Ausgangssignal der Detektiervorrichtung für die Klemmen eines externen Steckverbinders in Abhängigkeit von der Position auszuwählen, die von dem Konfigurationsteil (13) in Bezug auf die beiden leitfähigen Stifte eingenommen wird,
- Konfigurationsmittel, um dem Detektor (6) eine bestimmte Konfiguration zuzuordnen.

7. Vorrichtung nach Anspruch 6, **dadurch gekennzeichnet, dass** die mechanischen Auswahlmittel mechanisch mit den Konfigurationsmitteln zusammenzuwirken, um die Konfiguration des Detektors (6) an die Art von Ausgangssignal anzupassen, das dank der Auswahlmittel ausgewählt ist.

8. Vorrichtung nach Anspruch 6 oder 7, **dadurch gekennzeichnet, dass** die mechanischen Auswahlmittel leitfähige Stifte (10, 11) und eine mechanische Kodierung (12) aufweisen, die relativ zueinander schwenkbar sind.

9. Vorrichtung nach Anspruch 8, **dadurch gekennzeichnet, dass** das Konfigurationsteil (13) um eine Viertelumdrehung um eine Hauptachse der Vorrichtung in Drehung versetzt werden kann.

10. Vorrichtung nach Anspruch 9, **dadurch gekennzeichnet, dass** die Konfigurationsmittel eine Lippe (702) aufweisen, die auf dem Konfigurationsteil (13) erstellt ist und geeignet ist, mit einem Schalter zusammenzuwirken, der auf dem Detektor (6) erstellt ist, um das Ausgangssignal des Detektors (6) zu konfigurieren.

11. Vorrichtung nach einem der Ansprüche 6 bis 10, **dadurch gekennzeichnet, dass** die Konfiguration, die dem Detektor (6) zugeordnet ist, NO oder NC entspricht.

12. Vorrichtung nach einem der Ansprüche 6 bis 11, **dadurch gekennzeichnet, dass** der externe Steckverbinder (5) vom Typ des M12-Steckverbinders gemäß der Norm IEC60947-5-2 ist.

## Claims

1. Detection device comprising:
- a detector (60) that can be configured according to at least two determined configurations,
- an adapter (70) out of several separate adapters, each adapter (70) being able to be adapted to the detector and comprising two contiguous conductive pins (10, 11) and a polarizer,
- configuration means for assigning to the detector a determined configuration selected amongst common range and increased range,
wherein, when the adapter is adapted to the detector, the position of said polarizer relative to said two contiguous pins is adapted for selecting a type of output signal from the detection device to the terminals of an external connector (5).

2. Device according to Claim 1, **characterized in that** the mechanical selection means comprise conductive pins (10, 11) and a mechanical polarizer (12) positioned differently on each adapter (70) relative to the pins.

3. Device according to Claim 1 or 2, **characterized in that** the type of output signal from the detector (60) is selected from PNP NC, NPN NC, NPN NO, PNP NO, DC two-wire NO or DC two-wire NC.

4. Device according to one of Claims 1 to 3, **characterized in that** the configuration assigned to the detector corresponds to NO or NC.

5. Device according to one of Claims 1 to 4, **characterized in that** the external connector (5) is of M12 type compliant with standard IEC60947-5-2.

6. Detection device comprising:
- a detector (6) that can be configured according to at least two determined configurations,
- an adapter (7) positioned on the detector,
wherein the adapter (7) comprises:
- a configuration piece (13) movable relative to the detector that can assume one position out of several distinct positions,
- two contiguous conductive pins (10, 11) and a mechanical polarizer (12) adapted for being rotationally driven by said configuration piece (13) that is movable relative to said two conductive pins to select a type of output signal from the detection device to the terminals of an external connector, according to the position assumed by the configuration piece (13) relative to said two conductive pins,
- configuration means for assigning a determined configuration to the detector (6).

7. Device according to Claim 6, **characterized in that** the mechanical selection means cooperate mechanically with the configuration means so as to adapt the detector (6) configuration to the type of output signal selected by virtue of the selection means.

8. Device according to Claim 6 or 7, **characterized in that** the mechanical selection means comprise conductive pins (10, 11) and a mechanical polarizer (12) that move pivot-wise relative to one another.

9. Device according to Claim 8, **characterized in that** the configuration piece (13) can be actuated in rotation by a quarter-turn about a main axis of the device.

10. Device according to Claim 9, **characterized in that** the configuration means comprise a lip (702) situated on the configuration piece (13) and able to cooperate with a switch situated on the detector (6) in order to configure the output signal from the detector (6).

11. Device according to one of Claims 6 to 10, **characterized in that** the configuration assigned to the detector (6) corresponds to NO or NC.

12. Device according to one of Claims 6 to 11, **characterized in that** the external connector (5) is of M12 type compliant with standard IEC60947-5-2.
